# EUROPÄISCHE PATENTANMELDUNG

(11) **EP 3 358 218 A2**
(43) Veröffentlichungstag der Anmeldung: **08.08.2018**
(21) Anmeldenummer: 18153616.0
(22) Anmeldetag: 26.01.2018
(51) Int. Cl.: F16H 1/30, B60N 2/06, F16H 25/20, B60N 2/02

(54) **VERSTELLVORRICHTUNG ZUM VERSTELLEN EINES FAHRZEUGSITZES ENTLANG EINER VERSCHIEBEACHSE**

(30) Priorität: 01.02.2017 DE 102017101996
(71) Anmelder: IMS Gear SE & Co. KGaA, 78166 Donaueschingen (DE)
(72) Erfinder: Koop, Matthias, 78166 Donaueschingen (DE); Synovzik, Wilfried, 78183 Hüfingen (DE); Hengstler, Manuel, 78112 St. Georgen (DE); Fechler, Jens, 78183 Hüfingen (DE); Christian, Geiges, 78176 Blumberg (DE)
(74) Vertreter: Westphal, Mussgnug & Partner Patentanwälte mbB

(57) **Zusammenfassung**

Die vorliegende Erfindung betrifft eine Verstellvorrichtung zum Verstellen eines Fahrzeugsitzes eines Fahrzeugs entlang einer Verschiebeachse, umfassend eine fest mit dem Fahrzeug verbundene erste Unterschiene (12₁) und eine fest mit dem Fahrzeug verbundene zweite Unterschiene (12₂), eine in der ersten Unterschiene (12₁) parallel zur Verschiebeachse verschiebbar gelagerte erste Oberschiene (14₁) und eine in der zweiten Unterschiene (12₂) parallel zur Verschiebeachse verschiebbar gelagerte zweite Oberschiene (14₂), wobei die erste Unterschiene (12₁) und die erste Oberschiene (14₁) einen ersten Hohlraum (16₁) und die zweite Unterschiene (12₂) und die zweite Oberschiene (14₂) einen zweiten Hohlraum (16₂) umschließen, eine im ersten Hohlraum (16₁) angeordnete und drehfest mit der ersten Unterschiene (12₁) verbundene erste Gewindespindel (18₁) und eine im zweiten Hohlraum (16₂) angeordnete und drehfest mit der zweiten Unterschiene (12₂) verbundene zweite Gewindespindel (18₂), ein mit der ersten Gewindespindel (18₁) zusammenwirkendes und zumindest teilweise im ersten Hohlraum (16₁) angeordnetes und fest mit der ersten Oberschiene (14₁) verbundenes erstes Getriebe (22₁) und ein mit der zweiten Gewindespindel (18₂) zusammenwirkendes und zumindest teilweise im zweiten Hohlraum (16₂) angeordnetes und fest mit der zweiten Oberschiene (14₂) verbundenes zweites Getriebe (22₂), ein zwischen der erste Oberschiene (14₁) und der zweiten Oberschiene (14₂) angeordneter Antriebsmotor (26), ein zwischen dem Antriebsmotor (26) und dem ersten Getriebe (22₁) und zwischen dem Antriebsmotor (26) und dem zweiten Getriebe (22₂) verlaufender Antriebsstrang (26), wobei der Antriebsmotor (26) bezogen auf die Verschiebeachse um eine Distanz (D) versetzt zum ersten Getriebe (22₁) und zum zweiten Getriebe (22₂) angeordnet ist und der Antriebsstrang (26) Distanzüberbrückungsmittel (52) zum Überbrücken der Distanz (D) umfasst.

## Beschreibung

Die vorliegende Erfindung betrifft eine Verstellvorrichtung zum Verstellen eines Fahrzeugsitzes eines Fahrzeugs entlang einer Verschiebeachse.

Im Zuge der Erhöhung des Komforts in Fahrzeugen werden immer mehr Bewegungen zwischen zwei Fahrzeugteilen, die in der Vergangenheit manuell von den Fahrzeuginsassen bewerkstelligt worden, von Motoren, insbesondere von Elektromotoren, ausgeführt. Wurden in älteren Fahrzeugen die Fensterscheiben durch Drehen einer Kurbel manuell abgesenkt und angehoben, werden hierzu heutzutage nahezu ausnahmslos elektromotorische Fensterheber eingesetzt. Mehr und mehr setzen sich elektrisch verstellbare Heckklappen durch, mit welchen die Heckklappen per Knopfdruck automatisch öffnen und schließen lassen.

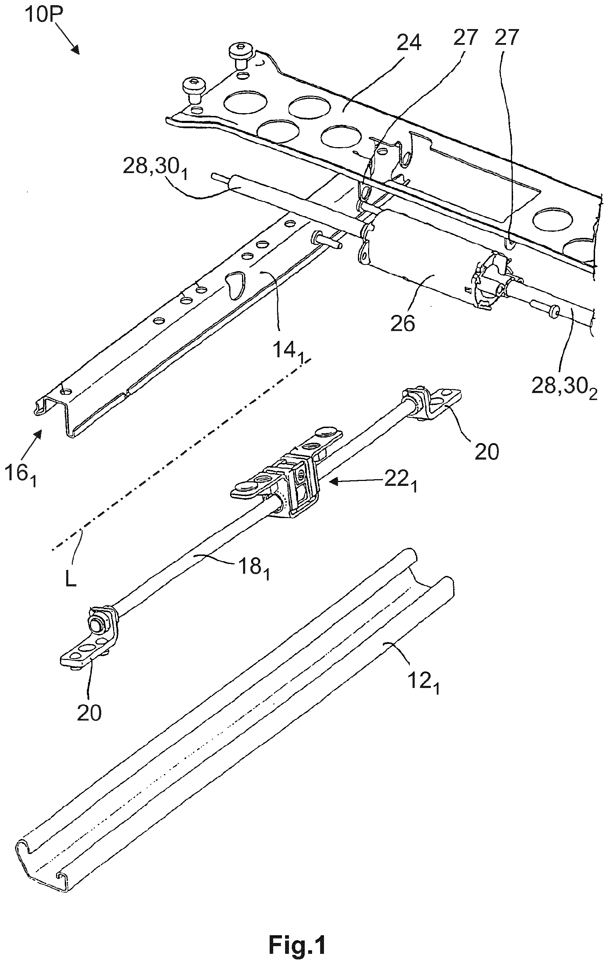

Auch die Sitzverstellung wird zunehmend unter Verwendung von elektrischen Stellmotoren vorgenommen. In Figur 1 ist eine aus dem Stand der Technik bekannte Verstellvorrichtung zum Sitzlängsverstellen eines Fahrzeugsitzes entlang einer Verschiebeachse perspektivisch dargestellt, wobei die Verschiebeachse in etwa mit der Längsachse des Fahrzeugs zusammenfällt. Eine derartige Verstellvorrichtung ist beispielsweise in der DE 10 2006 011 718 A1 beschreiben.

Die Verstellvorrichtung weist eine fest mit dem Fahrzeug verbundene erste Unterschiene und eine fest mit dem Fahrzeug verbundene zweite Unterschiene auf, wobei in Figur 1 nur die erste Unterschiene gezeigt ist. Die Unterschienen können am Boden des Fahrzeuginnenraums festgelegt sein. Weiterhin weist die Verstellvorrichtung eine in der ersten Unterschiene parallel zur Verschiebeachse verschiebbar gelagerte erste Oberschiene und eine in der zweiten Unterschiene parallel zur Verschiebeachse verschiebbar gelagerte zweite Oberschiene auf, wobei wiederum nur die erste Oberschiene dargestellt ist.

Im montierten Zustand umschließen die erste Unterschiene und die erste Oberschiene einen ersten Hohlraum und die zweite Unterschiene und die zweite Oberschiene einen zweiten Hohlraum. Im ersten Hohlraum ist eine erste Gewindespindel angeordnet, die unter Verwendung von Halterungen drehfest mit der ersten Unterschiene verbunden ist. Entsprechend ist im zweiten Hohlraum eine zweite Gewindespindel angeordnet und drehfest mit der zweiten Unterschiene verbunden.

Weiterhin weist die Verstellvorrichtung ein mit der ersten Gewindespindel zusammenwirkendes und zumindest teilweise im ersten Hohlraum angeordnetes und fest mit der ersten Oberschiene verbundenes erstes Getriebe und ein mit der zweiten Gewindespindel zusammenwirkendes und zumindest teilweise im zweiten Hohlraum angeordnetes und fest mit der zweiten Oberschiene verbundenes zweites Getriebe auf.

Zwischen der erste Oberschiene und der zweiten Oberschiene verläuft ein Träger, der an der ersten und zweiten Oberschiene befestigt ist. Auf dem Träger ist ein Antriebsmotor befestigt, der üblicherweise als ein Elektromotor ausgeführt ist. Zwischen dem Elektromotor und dem ersten Getriebe und zwischen dem Elektromotor und dem zweiten Getriebe verläuft ein Antriebsstrang, der eine erste Antriebswelle und eine zweite Antriebswelle umfasst, die im Wesentlichen linear verlaufen.

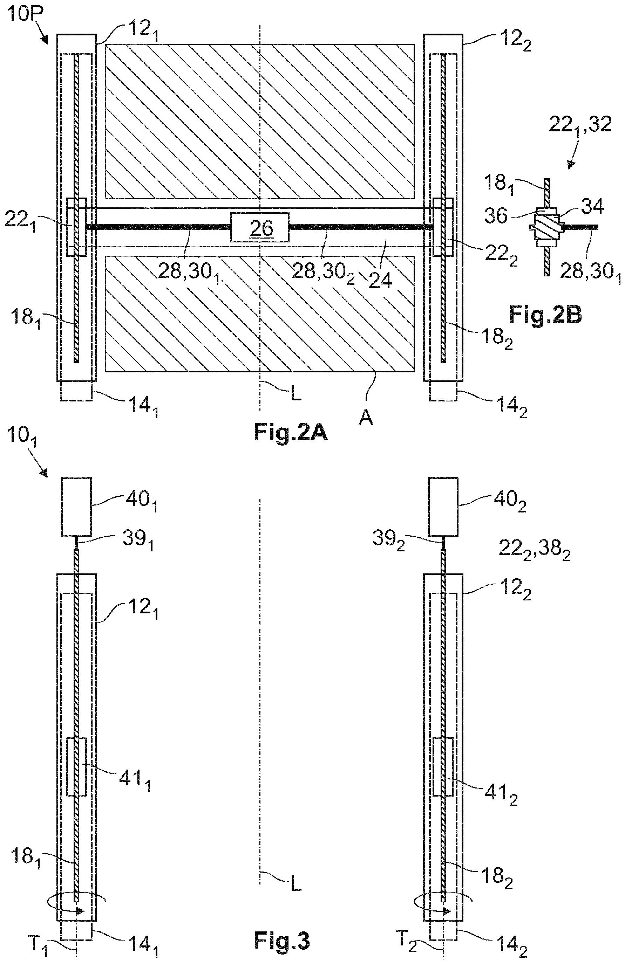

In Figur 2A ist die Verstellvorrichtung anhand einer prinzipiellen Draufsicht dargestellt.

Das Getriebe ist im dargestellten Beispiel als ein Schneckengetriebe ausgeführt, welches eine Schnecke und ein als Spindelmutter ausgeführtes Schneckenrad umfasst, die in kämmendem Eingriff miteinander stehen. Das Schneckengetriebe ist anhand einer prinzipiellen Darstellung in Figur 2B separat dargestellt. Die Spindelmutter weist ein nicht dargestelltes Innengewinde auf, in welches die Gewindespindel eingeschraubt ist. Die Antriebswellen sind mit den Schnecken drehfest verbunden.

Die Verstellvorrichtung wird auf folgende Weise betrieben: Durch Betätigen des Antriebsmotors werden die beiden Antriebswellen in Drehung versetzt. Die Drehung der Antriebswellen wird auf die Schnecken übertragen, wodurch wiederum die Spindelmuttern gedreht werden. Aufgrund dieser Drehung bewegen sich die Spindelmuttern entlang der Gewindespindel. Da die Getriebe fest mit den Oberschienen verbunden sind, verschieben sie sich zusammen mit den Oberschienen entlang der Verschiebeachse innerhalb der Unterschienen. Der Träger, der Antriebsstrang, der Antriebsmotor und der nicht dargestellte Fahrzeugsitz folgen dieser Bewegung.

Die Länge des maximalen Verstellwegs des Fahrzeugsitzes entlang der Verschiebeachse gleicht im Wesentlichen der Länge der Gewindespindeln. Die dabei vom Träger und vom Antriebsstrang überstrichene Fläche ist in Figur 2a annäherungsweise anhand eines schraffierten Abschnitts eingezeichnet. Um die Verschiebbarkeit des Fahrzeugsitzes über den gesamten Verstellweg sicherzustellen, darf auf der gekennzeichneten Fläche zwischen den beiden Unterschienen kein Hindernis angeordnet werden, gegen welches der Antriebsstrang, der Träger und/oder der Antriebsmotor anstoßen können.

Wie eingangs beschrieben, werden aus Komfortgründen immer mehr Elektromotoren in die Fahrzeuge eingebaut. Weiterhin nimmt die Anzahl von Assistenz- und Sicherheitssystemen immer weiter zu, so dass der ohnehin schon begrenzte Bauraum im Fahrzeug immer knapper wird. Die Problematik des begrenzten Bauraums wird mit der fortschreitenden Elektrifizierung der Fahrzeuge weiter zunehmen, da die Akkus zum Speichern von elektrischer Energie eine vergleichsweise geringe Energiedichte aufweisen und daher viel Platz benötigen.

Der Raum auf der gekennzeichneten Fläche zwischen den Unterschienen bietet sich zum Anordnen von flachen Bauteilen aller Art wie Feuerlöscher, Subwoofers, Akkus oder andere elektronische Komponenten insbesondere aus folgendem Grund an: Da dieser Raum zumindest zum größten Teil vom Fahrzeugsitz überbaut ist, kann dieser Raum nicht als Fußraum genutzt werden, so dass die Anordnung von flachen Gegenständen nicht stören würde und diese auch nicht von den Insassen belastet oder beschädigt werden können. Da aber dieser Raum zum Sicherstellen der Verstellbarkeit des Fahrzeugsitzes über den gesamten Verstellweg aus den oben erläuterten Gründen frei bleiben muss, kann dieser Raum nicht zur Anordnung von Bauteilen genutzt werden.

Aufgabe der vorliegenden Erfindung ist es daher, eine Verstellvorrichtung zum Verstellen eines Fahrzeugsitzes eines Fahrzeugs entlang einer Verschiebeachse der eingangs genannten Art derart weiterzuentwickeln, dass der Raum zwischen den Unterschienen der Verstellvorrichtung zum Anordnen von Bauteilen zumindest teilweise nutzbar wird.

Diese Aufgabe wird mit den in den Ansprüchen 1 und 11 angegebenen Merkmalen gelöst. Vorteilhafte Ausführungsformen sind Gegenstand der Unteransprüche.

Eine Ausführungsform der Erfindung betrifft eine Verstellvorrichtung zum Verstellen eines Fahrzeugsitzes eines Fahrzeugs entlang einer Verschiebeachse, umfassend eine fest mit dem Fahrzeug verbundene erste Unterschiene und eine fest mit dem Fahrzeug verbundene zweite Unterschiene, und eine in der ersten Unterschiene parallel zur Verschiebeachse verschiebbar gelagerte erste Oberschiene und eine in der zweiten Unterschiene parallel zur Verschiebeachse verschiebbar gelagerte zweite Oberschiene, wobei die erste Unterschiene und die erste Oberschiene einen ersten Hohlraum und die zweite Unterschiene und die zweite Oberschiene einen zweiten Hohlraum umschließen.

Weiterhin umfasst diese Ausführungsform der Verstellvorrichtung eine im ersten Hohlraum angeordnete und drehfest mit der ersten Unterschiene verbundene erste Gewindespindel und eine im zweiten Hohlraum angeordnete und drehfest mit der zweiten Unterschiene verbundene zweite Gewindespindel, ein mit der ersten Gewindespindel zusammenwirkendes und zumindest teilweise im ersten Hohlraum angeordnetes und fest mit der ersten Oberschiene verbundenes erstes Getriebe und ein mit der zweiten Gewindespindel zusammenwirkendes und zumindest teilweise im zweiten Hohlraum angeordnetes und fest mit der zweiten Oberschiene verbundenes zweites Getriebe, einen zwischen der erste Oberschiene und der zweiten Oberschiene angeordneten Antriebsmotor, und einen zwischen dem Antriebsmotor und dem ersten Getriebe und zwischen dem Antriebsmotor und dem zweiten Getriebe verlaufenden Antriebsstrang, wobei der Antriebsmotor bezogen auf die Verschiebeachse um eine Distanz versetzt zum ersten Getriebe und zum zweiten Getriebe angeordnet ist und der Antriebsstrang Distanzüberbrückungsmittel zum Überbrücken der Distanz umfasst.

In der eingangs beschriebenen, aus dem Stand der Technik bekannten Verstellvorrichtung sind das Getriebe, der Antriebsstrang und der Antriebsmotor in etwa mittig an der Oberschiene angeordnet. Die Verwendung der vorschlagsgemäßen Distanzüberbrückungsmittel im Antriebsstrang ermöglicht es, den Antriebsmotor und den Antriebsstrang um eine wählbare Distanz versetzt bezogen auf die Verschiebeachse anzuordnen, beispielsweise im Bereich der vorderen oder hintere Enden der Oberschienen. Beim Verstellen des Fahrzeugsitzes in eine Richtung werden der Antriebsmotor und Antriebsstrang nur teilweise in den Raum zwischen den Unterschienen verschoben, während sie beim Verstellen in die entgegengesetzte Richtung aus dem Raum zwischen den Unterschienen hinaus verschoben werden. Ein Teil des Raums zwischen den Unterschienen wird aufgrund der vorschlagsgemäßen Ausführungsform der Verstellvorrichtung vom Antriebsstrang und vom Antriebsmotor nicht überstrichen. In diesen Teil des Raums können Bauteile angeordnet werden, so dass dieser genutzt werden kann.

Nach Maßgabe einer weiteren Ausführungsform umfassen die Distanzüberbrückungsmittel eine biegsame erste Antriebswelle und eine biegsame zweite Antriebswelle. Biegsame Antriebswellen, auch Flexwellen genannt, ermöglichen es auf einfache Weise, die Distanz zwischen dem Antriebsmotor und den Getrieben zu überwinden, ohne dass zusätzliche konstruktive Maßnahmen ergriffen werden müssen.

In einer weitergebildeten Ausführungsform können das erste Getriebe und das zweite Getriebe jeweils als ein Schneckengetriebe ausgebildet sein. Schneckengetriebe ermöglichen große Übersetzungsverhältnisse auf einem relativ kleinen Raum. Zudem zeichnen sie sich durch eine geringe Geräuschentwicklung auf, was sich positiv auf die Wahrnehmung der Sitzverstellung durch die Fahrzeuginsassen bemerkbar macht.

Bei einer weitergebildeten Ausführungsform können das Schneckengetriebe eine Schnecke mit einer Schneckenachse und ein Schneckenrad mit einer Schneckenradachse aufweisen, wobei die Schneckenachse und die Schneckenradachse einen Achswinkel einschließen, der weniger als 90° beträgt. Bei der überwiegenden Mehrzahl der Schneckengetriebe schließen die Schneckenachse und die Schneckenradachse einen Achswinkel von 90° ein, allerdings lassen sich mit einer entsprechenden Anpassung der Verzahnung des Schneckenrads und der Schnecke auch Achswinkel von weniger als 90° darstellen. Derartige Achswinkel eignen sich insbesondere in Verbindung mit biegsamen Antriebswellen, da hierdurch die Winkeldifferenz, welche die biegsamen Antriebswellen überbrücken müssen, gering gehalten werden können. Die biegsamen Antriebswellen werden entsprechend weniger stark gebogen und daher weniger stark beansprucht, wodurch sich die Lebensdauer erhöhen und die Ausfallwahrscheinlichkeit senken lassen. Zudem wird die Akustik verbessert.

Eine weitergebildete Ausführungsform zeichnet sich dadurch aus, dass das erste Getriebe und das zweite Getriebe jeweils als ein Stirnradgetriebe ausgebildet sind. Stirnradgetriebe zeichnen sich durch einen hohen Wirkungsgrad aus, so dass die Verstellvorrichtung nach dieser Ausführungsform besonders effizient betrieben werden kann.

Eine weitere Ausführungsform ist dadurch gekennzeichnet, dass die Distanzüberbrückungsmittel ein erstes Riemengetriebe und ein zweites Riemengetriebe umfassen. Im Vergleich zu Stirnradgetrieben können Riemengetriebe so ausgebildet werden, dass sie eine verringerte Geräuschentwicklung aufweisen.

In einer weiteren Ausführungsform können die Distanzüberbrückungsmittel eine biegsame erste Antriebswelle und eine biegsame zweite Antriebswelle umfassen. Dabei kann das erste Riemengetriebe antriebsseitig ein mit der erste Antriebswelle verbundenes erstes Antriebsrad und abtriebsseitig ein erstes Abtriebsrad aufweisen, welches als eine mit der ersten Gewindespindel zusammenwirkende erste Spindelmutter ausgebildet ist. Zudem kann das zweite Riemengetriebe antriebsseitig ein mit der zweite Antriebswelle verbundenes zweites Antriebsrad und abtriebsseitig ein zweites Abtriebsrad aufweisen, welches als eine mit der zweiten Gewindespindel zusammenwirkende zweite Spindelmutter ausgebildet ist.

Bei der Verwendung von Riemengetrieben ist man in der Anordnung des Antriebsrads flexibel, da diese über eine entsprechende Anpassung der Länge des Riemens auf einfache Weise verändert werden kann, was bei Stirnradgetrieben nicht ohne weiteres möglich ist. Hierdurch lässt sich diese Ausführungsform an die verschiedenen baulichen Gegebenheiten der bestehenden Verstellvorrichtungen anpassen. Insbesondere lässt sich die Anbindung des Antriebsrads an die biegsame Antriebswelle im Vergleich zu Stirnradgetrieben vereinfachen.

Nach Maßgabe einer weiteren Ausführungsform sind der Antriebsstrang, das erste und das zweite Getriebe und die erste und die zweite Gewindespindel so ausgebildet, dass zwischen dem vom Antriebsmotor bereitgestellten Drehmoment und dem an den Gewindespindeln anliegenden Drehmoment ein Gesamtübersetzungsverhältnis zwischen 6 und 7 anliegt, die erste und die zweite Gewindespindel eine Gewindesteigung aufweist, welche gegenüber einer Gewindenormalsteigung reduziert oder erhöht ist, und der Antriebsstrang und/oder das erste und das zweite Getriebe so an die reduzierte oder erhöhte Gewindesteigung angepasst sind, dass das Gesamtübersetzungsverhältnis erhalten bleibt. Bei aus dem Stand der Technik bekannten Verstellvorrichtungen, die derjenigen entsprechen, die in der DE 10 2006 011 718 A1 beschreiben ist, beträgt die Gewindenormalsteigung zwischen 2,5 und 3,5 mm. Gegenüber dieser Gewindenormalsteigung ist die Gewindesteigung beispielsweise um 60 bis 70% reduziert. Um dennoch das Gesamtübersetzungsverhältnis gleich halten zu können, sind der Antriebsstrang und/oder die Getriebe entsprechend angepasst. Wenn der Antriebsstrang unverändert bleibt, muss das Getriebe vom Antriebsmotor abgegebene Drehzahl weniger stark mindern, so dass das Übersetzungsverhältnis des Getriebes im Vergleich zu bekannten Verstellvorrichtungen näher an 1 heranrückt. Diese Maßnahme lässt sich insbesondere bei Stirnrädern zielführend einsetzen, da bei Stirnrädern ohne Zwischenräder der Abstand der Achsen der beiden Stirnräder von ihren Durchmessern bestimmt wird. Je nach baulichen Gegebenheiten muss der Abstand aber ein bestimmtes Mindestmaß aufweisen, beispielsweise, um die biegsame Antriebswelle mit dem Stirnradgetriebe verbinden zu können. Die veränderte Gewindesteigung kann entsprechend verändert werden, um die Durchmesser der beiden Stirnräder anzugleichen und damit den Achsabstand zu vergrößern oder zu verkleinern.

Gemäß einer weiteren Ausführungsform sind der Antriebsstrang, das erste und das zweite Getriebe und die erste und die zweite Gewindespindel so ausgebildet, dass zwischen dem vom Antriebsmotor bereitgestellten Drehmoment und dem an den Gewindespindeln anliegenden Drehmoment ein Gesamtübersetzungsverhältnis zwischen 6 und 7 anliegt, der Antriebsstrang ein weiteres Getriebe, insbesondere ein Motor-Schneckengetriebe umfasst, und die erste und die zweite Gewindespindel und/oder das erste und das zweite Getriebe so an das weitere Getriebe angepasst sind, dass das Gesamtübersetzungsverhältnis erhalten bleibt.

Das weitere Getriebe und insbesondere das Motor-Schneckengetriebe, welches ein Verteilergetriebe darstellt, wird dazu verwendet, die Drehzahlen der biegsamen Antriebswellen und in den an diesen angeschlossenen Getrieben zu verringern, wodurch hohe Wärmeentwicklungen verringert werden und der hiermit einhergehende Verschleiß reduziert wird. Des Weiteren wirkt sich eine geringere Drehzahl in den an die Antriebswellen angeschlossenen Getrieben positiv auf die Geräuschentwicklung aus.

Bei einer weiteren Ausführungsform umfasst der Antriebsstrang eine erste Antriebswelle und eine zweite Antriebswelle, wobei das erste Getriebe als ein erstes Schneckengetriebe und das zweite Getriebe als ein zweites Schneckengetriebe ausgebildet sind, das erste Riemengetriebe antriebsseitig ein mit der ersten Antriebswelle verbundenes erstes Antriebsrad und abtriebsseitig ein mit dem ersten Schneckengetriebe zusammenwirkendes erstes Abtriebsrad und das zweite Riemengetriebe antriebsseitig ein mit der zweiten Antriebswelle verbundenes zweites Antriebsrad und abtriebsseitig ein mit dem zweiten Schneckengetriebe zusammenwirkendes zweites Abtriebsrad umfassen. In dieser Ausführungform können linear verlaufende Antriebswellen und Schneckengetriebe verwendet werden, was bei bekannten Verstellvorrichtungen auch der Fall ist. Die bereits für bekannte Verstellvorrichtungen eingesetzten Schneckengetriebe können ohne konstruktive Veränderungen verwendet werden. Insofern beschränkt sich die konstruktive Anpassung im Wesentlichen nur auf das Vorsehen der Riemengetriebe, so dass der Mehraufwand gegenüber den bekannten Verstellvorrichtungen gering ist.

Eine Ausgestaltung der Erfindung betrifft eine Verstellvorrichtung zum Verstellen eines Fahrzeugsitzes eines Fahrzeugs entlang einer Verschiebeachse, umfassend eine fest mit dem Fahrzeug verbundene erste Unterschiene und eine fest mit dem Fahrzeug verbundene zweite Unterschiene, und eine in der ersten Unterschiene parallel zur Verschiebeachse verschiebbar gelagerte erste Oberschiene und eine in der zweiten Unterschiene parallel zur Verschiebeachse verschiebbar gelagerte zweite Oberschiene, wobei die erste Unterschiene und die erste Oberschiene einen ersten Hohlraum und die zweite Unterschiene und die zweite Oberschiene einen zweiten Hohlraum umschließen.

Weiterhin umfasst diese Ausgestaltung der Verstellvorrichtung eine im ersten Hohlraum angeordnete und um eine erste Drehachse drehbar gelagerte erste Gewindespindel und eine im zweiten Hohlraum angeordnete und um eine zweite Drehachse drehbar gelagerte zweite Gewindespindel, eine mit der ersten Gewindespindel zusammenwirkende und zumindest teilweise im ersten Hohlraum angeordnete und fest mit der ersten Oberschiene verbundene erste Spindelmutter und eine mit der zweiten Gewindespindel zusammenwirkende und zumindest teilweise im zweiten Hohlraum angeordnete und fest mit der zweiten Oberschiene verbundene zweite Spindelmutter.

Darüber hinaus weist diese Ausgestaltung der Verstellvorrichtung einen ersten Antriebsmotor, der zum Antreiben der ersten Gewindespindel abtriebsseitig mit der ersten Gewindespindel wirkverbunden ist, und einen zweiten Antriebsmotor auf, der zum Antreiben der zweiten Gewindespindel abtriebsseitig mit der zweiten Gewindespindel wirkverbunden ist.

Im Gegensatz zu den zuvor vorgestellten Ausführungsformen sind die Gewindespindeln drehbar im Hohlraum zwischen den Oberschienen und den Unterschienen gelagert. Jeder Gewindespindel ist ein eigener Antriebsmotor zugeordnet, um die Gewindespindeln in Drehung zu versetzen. Der jeweilige Antriebsmotor können sehr nah an der betreffenden Gewindespindel angeordnet werden, so dass der in Anspruch genommene Bauraum gering gehalten wird. Insbesondere ist kein Antriebsmotor zwischen den Oberschienen angeordnet und kein Antriebsstrang vorhanden, der durch den Raum zwischen den beiden Oberschienen verläuft. Der Raum zwischen den beiden Unterschienen ist vollständig nutzbar.

Gemäß einer weiteren Ausgestaltung können der erste Antriebsmotor eine erste Abtriebswelle und der zweite Antriebsmotor eine zweite Abtriebswelle umfassen und die erste Abtriebswelle fluchtend zur ersten Drehachse und die zweite Abtriebswelle fluchtend zur zweiten Drehachse angeordnet sein. Die Abtriebswellen können starr und daher im Vergleich zu flexiblen Wellen einfach ausgeführt sein, was die Herstellungskosten senkt. Zudem wird der von den beiden Antriebsmotoren eingenommene Raum zwischen den beiden Unterschienen gering gehalten, so dass dieser Raum vollständig oder nahezu vollständig nutzbar ist.

Nach einer fortgebildeten Ausgestaltung umfasst die Verstellvorrihctung ein erstes Getriebe, welches antriebsseitig mit dem ersten Antriebsmotor zum Antreiben der ersten Gewindespindel und abtriebsseitig mit der ersten Gewindespindel wirkverbunden ist, und ein zweites Getriebe, welches antriebsseitig mit dem zweiten Antriebsmotor zum Antreiben der zweiten Gewindespindel und abtriebsseitig mit der zweiten Gewindespindel wirkverbunden ist. Die Verwendung von Getrieben ermöglicht es, das für das Verstellen des Fahrzeugsitzes notwendige Drehmoment bereitzustellen, ohne dass der Antriebsmotor entsprechend groß dimensioniert werden muss, so dass insbesondere Bauraum eingespart werden kann. Die zum Verstellen des Fahrzeugsitzes verwendeten Antriebsmotoren sind nahezu ausnahmslos Elektromotoren, die eine vergleichsweise hohe Drehzahl abgeben. Der Fahrzeugsitz soll aber vorzugsweise mit einer geringen Geschwindigkeit verstellt werden, was mit der Verwendung von Getrieben auf einfache und raumsparende Weise gelöst werden kann.

In einer weiteren Ausgestaltung können das erste Getriebe als ein erstes Planetengetriebe und das zweite Getriebe als ein zweites Planetengetriebe ausgestaltet sein. Planetengetriebe stellen ein hohes Übersetzungsverhältnis innerhalb eines geringen Bauraums bereit. Zudem können sowohl das Planetengetriebe als auch der Antriebsmotor auf derselben Achse wie die Gewindespindel angeordnet werden, was Bauraum einspart.

Nach einer weiteren Ausgestaltung der Verstellvorrichtung können das erste Planetengetriebe und/oder das zweite Planentengetriebe als ein Schraubrad-Planetengetriebe ausgebildet sein. Schraubrad-Planetengetriebe bieten ein im Vergleich zu herkömmlichen Planetengetrieben noch höheres Übersetzungsverhältnis bei ansonsten gleichen Randbedingungen. Zudem ist der Eingriff innerhalb des Schraubrad-Planetengetriebes sehr gleichmäßig und die Geräuschentwicklung gegenüber herkömmlichen Planetengetrieben geringer.

Beispielhafte Ausführungsformen der Erfindung werden im Folgenden unter Bezugnahme auf die beigefügten Zeichnungen näher erläutert. Es zeigen
- Figur 1: eine perspektivische Darstellung einer aus dem Stand der Technik bekannten Verstellvorrichtung,
- Figur 2A: eine prinzipielle Draufsicht auf eine aus dem Stand der Technik bekannten Verstellvorrichtung,
- Figur 2B: eine separate und prinzipielle Darstellung eines Schneckengetriebes, welches in der in Figur 2A dargestellten Verstellvorrichtung verwendet wird,
- Figur 3: ein erstes Ausführungsbeispiel einer vorschlagsgemäßen Verstellvorrichtung anhand einer prinzipiellen Draufsicht,
- Figur 4: ein zweites Ausführungsbeispiel einer vorschlagsgemäßen Verstellvorrichtung anhand einer prinzipiellen Draufsicht,
- Figur 5A: eine teilweise geschnittene Ansicht durch ein Schraubrad-Planetengetriebe,
- Figur 5B: eine perspektivische Darstellung des in Figur 5A dargestellten Schraubrad-Planetengetriebes,
- Figur 6A: ein drittes Ausführungsbeispiel einer vorschlagsgemäßen Verstellvorrichtung anhand einer prinzipiellen Draufsicht,
- Figur 6B: das in Figur 6A dargestellte erste Schneckengetriebe anhand einer prinzipiellen separaten Darstellung,
- Figur 7: ein viertes Ausführungsbeispiel einer vorschlagsgemäßen Verstellvorrichtung anhand einer prinzipiellen Draufsicht,
- Figur 8: ein fünftes Ausführungsbeispiel einer vorschlagsgemäßen Verstellvorrichtung anhand einer prinzipiellen Draufsicht,
- Figur 9: ein sechstes Ausführungsbeispiel einer vorschlagsgemäßen Verstellvorrichtung anhand einer prinzipiellen Draufsicht, und
- Figur 10: ein siebtes Ausführungsbeispiel einer vorschlagsgemäßen Verstellvorrichtung anhand einer prinzipiellen Draufsicht.

In Figur 1 ist eine bekannte Verstellvorrichtung 10P zum Sitzlängsverstellen eines nicht dargestellten Fahrzeugsitzes entlang einer Verschiebeachse L perspektivisch dargestellt, wobei die Verschiebeachse L in etwa mit der Längsachse des ebenfalls nicht dargestellten Fahrzeugs zusammenfällt.

Die Verstellvorrichtung 10P weist eine fest mit dem Fahrzeug verbundene erste Unterschiene 12₁ und eine fest mit dem Fahrzeug verbundene zweite Unterschiene 12₂ auf, wobei in Figur 1 nur die erste Unterschiene 12₁ gezeigt ist. Die Unterschienen 12₁, 12₂ können am Boden des Fahrzeuginnenraums festgelegt sein. Weiterhin weist die Verstellvorrichtung 10P eine in der ersten Unterschiene 12₁ parallel zur Verschiebeachse L verschiebbar gelagerte erste Oberschiene 14₁ und eine in der zweiten Unterschiene 12₂ parallel zur Verschiebeachse L verschiebbar gelagerte zweite Oberschiene 14₂ auf, wobei wiederum nur die erste Oberschiene 14₁ dargestellt ist. Die Oberschienen 14₁, 14₂ gleiten direkt oder über nicht dargestellte Verstell- und/oder Lagerelemente auf den Unterschienen 12₁, 12₂. An den beiden Oberschienen 14₁, 14₂ ist ein nicht dargestellter Fahrzeugsitz befestigt.

Im montierten Zustand umschließen die erste Unterschiene 12₁ und die erste Oberschiene 14₁ einen ersten Hohlraum 16₁ und die zweite Unterschiene 12₂ und die zweite Oberschiene 14₂ einen zweiten Hohlraum 16₂. Im ersten Hohlraum 16₁ ist eine erste Gewindespindel 18₁ angeordnet, die unter Verwendung von Halterungen 20 drehfest mit der ersten Unterschiene 12₁ verbunden ist. Entsprechend ist im zweiten Hohlraum 16₂ eine zweite Gewindespindel 18₂ angeordnet und drehfest mit der zweiten Unterschiene 12₂ verbunden (nicht dargestellt).

Weiterhin weist die Verstellvorrichtung 10P ein mit der ersten Gewindespindel 18₁ zusammenwirkendes und zumindest teilweise im ersten Hohlraum 16₁ angeordnetes und fest mit der ersten Oberschiene 14₁ verbundenes erstes Getriebe 22₁ und ein mit der zweiten Gewindespindel 18₂ zusammenwirkendes und zumindest teilweise im zweiten Hohlraum 16₂ angeordnetes und fest mit der zweiten Oberschiene 14₂ verbundenes zweites Getriebe 22₂ auf.

Zwischen der erste Oberschiene 14₁ und der zweiten Oberschiene 14₂ verläuft ein Träger 24, der an der ersten und zweiten Oberschiene 14₁, 14₂ befestigt ist. Am Träger 24 ist ein Antriebsmotor 26 mit Befestigungslaschen 27 befestigt, der üblicherweise als ein Elektromotor ausgeführt ist. Das Vorsehen des Trägers 24 ist nicht zwingend notwendig. Anstelle des Trägers 24 kann der Antriebsmotor 26 auch am Fahrzeugsitz befestigt sein. Zwischen dem Antriebsmotor 26 und dem ersten Getriebe 22₁ und zwischen dem Antriebsmotor 26 und dem zweiten Getriebe 22₂ verläuft ein Antriebsstrang 28, der eine linear verlaufende erste Antriebswelle 30₁ und eine linear verlaufende zweite Antriebswelle 30₂ umfasst.

In Figur 2A ist die Verstellvorrichtung 10 anhand einer prinzipiellen Draufsicht dargestellt.

Die Getriebe 22₁, 22₂ sind im dargestellten Bespiel jeweils als ein Schneckengetriebe 32 ausgeführt, welches eine Schnecke 34 und ein als Spindelmutter 41 ausgeführtes Schneckenrad 36 umfasst, die in kämmendem Eingriff miteinander stehen. Das Schneckengetriebe 32 ist anhand einer prinzipiellen Darstellung in Figur 2B separat dargestellt. Die Spindelmutter 41 weist ein nicht dargestelltes Innengewinde auf, in welches die Gewindespindel 18₁ eingeschraubt ist. Die Antriebswellen 30 sind mit den Schnecken 34 drehfest verbunden.

Die Verstellvorrichtung 10P wird auf folgende Weise betrieben: Durch Betätigen des Antriebsmotors 26 werden die beiden Antriebswellen 30₁, 30₂ in Drehung versetzt. Die Drehung der Antriebswellen 30₁, 30₂ wird auf die Schnecken 34 übertragen, wodurch wiederum die Spindelmuttern 41 gedreht werden. Aufgrund dieser Drehung bewegen sich die Spindelmuttern 41 entlang der Gewindespindeln 18₁, 18₂. Da die Getriebe 22₁, 22₂ fest mit den Oberschienen 14₁, 14₂ verbunden sind, verschieben sie sich zusammen mit den Oberschienen 14₁, 14₂ entlang der Verschiebeachse L innerhalb der Unterschienen 12₁, 12₂. Der Träger 24, der Antriebsstrang 28, der Antriebsmotor 26 und der nicht dargestellte Fahrzeugsitz folgen dieser Bewegung.

Die Länge des maximalen Verstellwegs des Fahrzeugsitzes entlang der Verschiebeachse L gleicht im Wesentlichen der Länge der Gewindespindeln 18₁, 18₂. Die dabei vom Träger 24 und vom Antriebsstrang 28 überstrichene Fläche A ist in Figur 2A annäherungsweise anhand eines schraffierten Abschnitts eingezeichnet. Um die Verschiebbarkeit des Fahrzeugsitzes über den gesamten Verstellweg sicherzustellen, darf auf der gekennzeichneten Fläche A zwischen den beiden Unterschienen 12₁, 12₂ kein Hindernis angeordnet werden, gegen welches Antriebsstrang 28 und/oder der Antriebsmotor 26 anstoßen kann.

In Figur 3 ist ein erstes Ausführungsbeispiel einer erfindungsgemäßen Verstellvorrichtung 10₁ anhand einer prinzipiellen Draufsicht gezeigt. Der Aufbau der erfindungsgemäßen Verstellvorrichtung 10₁ nach dem ersten Ausführungsbeispiel unterscheidet sich von demjenigen der bekannten Verstellvorrichtung 10P insbesondere in folgenden Punkten:
Die erste und die zweite Gewindespindel 18₁, 18₂ sind in diesem Fall um eine Drehachse T drehbar gelagert und an einem Ende direkt mit jeweils einer Abtriebswelle 39 eines Antriebsmotors 40₁, 40₂ verbunden. Folglich ist der ersten Gewindespindel 18₁ ein erster Antriebsmotor 40₁ und der zweiten Gewindespindel 40₂ ein zweiter Antriebsmotor 26 zugeordnet. Der erste Antriebsmotor 40₁ bzw. dessen Abtriebswelle 39 ist fluchtend zur Drehachse T der ersten Gewindespindel 18₁ und der zweite Antriebsmotor 40₂ bzw. dessen Abtriebswelle 39 fluchtend zur Drehachse T der zweiten Gewindespindel 18₂ angeordnet. Zudem umfasst die Verstellvorrichtung 10 in diesem Ausführungsbeispiel eine erste Spindelmutter 41₁ und eine zweite Spindelmutter 41₂, welche jeweils fest mit der ersten bzw. zweiten Oberschiene 14₁, 14₂ verbunden sind und mit der ersten Gewindespindel 18₁ bzw. der zweiten Gewindespindel 18₂ zusammenwirken. Ein Träger 24 ist nicht notwendig.

In dieser Ausführungsform der vorschlagsgemäßen Verstellvorrichtung 10₁ sind zwischen den beiden Unterschienen 12₁, 12₂ keine Komponenten der Verstellvorrichtung 10₁ angeordnet, so dass der Raum zwischen den beiden Unterschienen 12₁, 12₂ vollständig zur Anordnung von Bauteilen jeder Art des Fahrzeugs verwendet werden kann, beispielsweise für Ablagefächer, Feuerlöscher, Subwoofer, Akkus und/oder andere elektronische Komponenten.

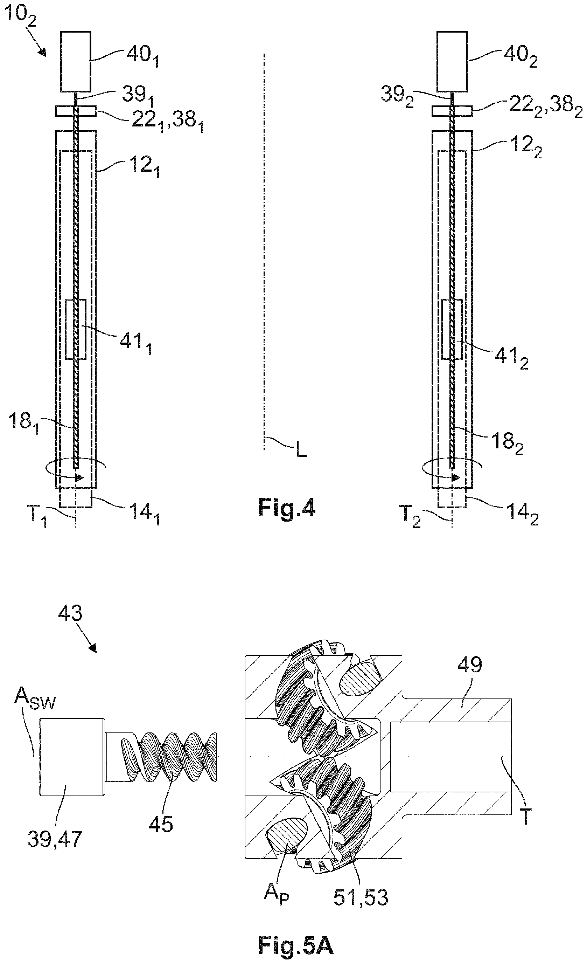

Das in Figur 4 dargestellte zweite Ausführungsbeispiel der Verstellvorrichtung 10₂ ist weitgehend identisch zu dem in Figur 3 dargestellten ersten Ausführungsbeispiel der Verstellvorrichtung 10₁ aufgebaut. Auch hier sind die erste und die zweite Gewindespindel 18₁, 18₂ drehbar gelagert, allerdings sind die erste und die zweite Gewindespindel 18₁, 18₂ nicht direkt mit der Abtriebswelle 39 des ersten bzw. zweiten Antriebsmotors 40₁, 40₂ verbunden. Vielmehr ist die erste Gewindespindel 18₁ an einem Ende mit dem ersten Getriebe 22₁ und die zweite Gewindespindel 18₂ mit einem Ende mit dem zweiten Getriebe 22₂ verbunden. Im zweiten Ausführungsbeispiel sind das erste Getriebe 22₁ und das zweite Getriebe 22₂ als Planetengetriebe 38₁, 38₂ ausgeführt. Jedes der Planetengetriebe 38₁, 38₂ ist antriebsseitig mit der Abtriebswelle 39 des ersten bzw. des zweiten Antriebsmotors 40₁, 40₂ verbunden. Folglich ist der ersten Gewindespindel 18₁ ein erster Antriebsmotor 40₁ und der zweiten Gewindespindel 40₂ ein zweiter Antriebsmotor 26 zugeordnet. Der erste Antriebsmotor 40₁ bzw. seine Abtriebswelle 39 und das erste Planetengetriebe 38₁ sind fluchtend zur Drehachse T der ersten Gewindespindel 18₁ und der zweite Antriebsmotor 40₂ bzw. seine Abtriebswelle 39 und das zweite Planetengetriebe 38₂ fluchtend zur Drehachse T der zweiten Gewindespindel 18₂ angeordnet.

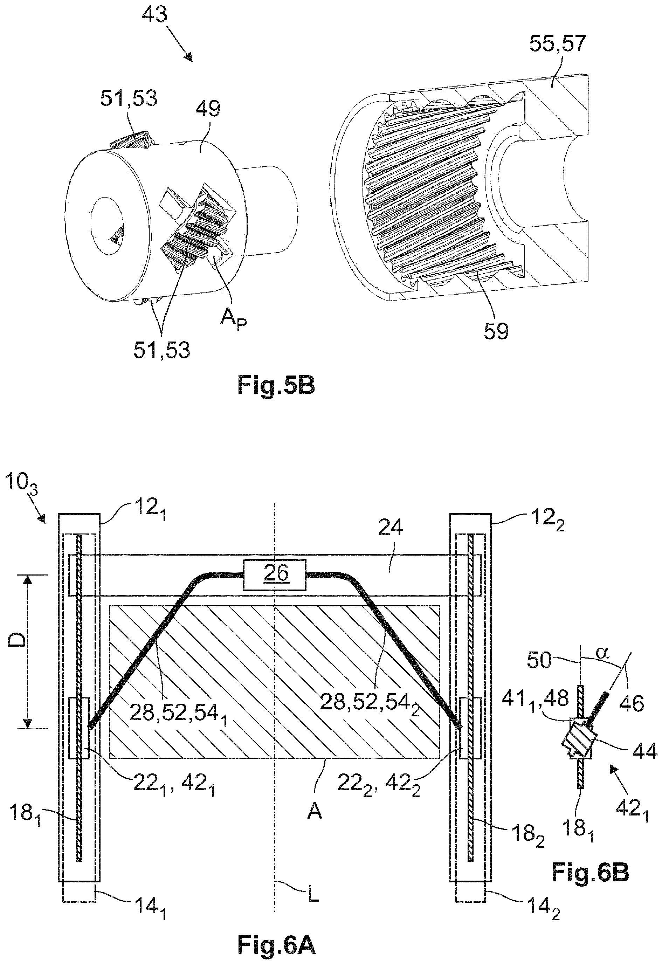

Das erste Planetengetriebe 381 und das zweite Planetengetriebe 382 können als herkömmliche Planetengetriebe oder auch als sogenannte Schraubrad-Planetengetriebe 43 ausgebildet sein. Ein derartiges Schraubrad-Planetengetriebe 43 ist in den Figuren 5A und 5B jeweils in Teilen und nicht montiert dargestellt. In diesem Fall weist die Abtriebswelle 39 eine Schraubradverzahnung 45 auf, weshalb die Abtriebswelle 39 auch als Schraubradwelle 47 bezeichnet wird und welche um eine Schraubradwellenachse A_{SW} drehbar ist. Wie bei herkömmlichen Planetengetrieben ist ein Planetenträger 49 vorhanden, in welchem in diesem Fall drei Planetenräder 51 (siehe insbesondere Figur 5B) um jeweils eine Planetenradachse AP drehbar gelagert sind. Die Planetenräder 51 weisen eine Planetenradverzahnung 53 auf, welche an die Schraubradverzahnung 45 angepasst ist, so dass ein weitgehend optimaler Eingriff zwischen der Schraubradwelle 47 und den Planetenrädern 51 ermöglicht wird. Eine Besonderheit der Schraubrad-Planetengetrieben 43 ist, dass die Planetenradachsen AP windschief zur Schraubradwellenachse A_{SW} verläuft.

Wie aus Figur 5B erkennbar, weist das Schraubrad-Planetengetriebe 43 auch ein Hohlrad 53 auf, welches in diesem Fall als ein Innenschraubrad 55 mit einer Innenverzahnung 59 ausgeführt ist, wobei die Innenverzahnung 59 an die Planetenradverzahnung 53 derart angepasst ist, dass ein weitgehend optimaler Eingriff zwischen den Planetenrädern 51 und dem Innenschraubrad 47 bereitgestellt wird. Der Planetenträger 49 ist drehbar im Innenschraubrad 55 gelagert. Wie bei herkömmlichen Planetengetrieben kann bei einer drehenden Schraubradwelle 47 entweder der Planetenträger 49 oder das Innenschraubrad 47 feststehen und das jeweils andere Teil drehen. In diesem Ausführungsbeispiel können das Innenschraubrad 47 drehfest mit einem nicht dargestellten Gehäuse des Antriebsmotors 40 und die Gewindespindel drehfest mit dem Planetenträger 49 verbunden werden. Folglich fallen die Schraubradwellenachse Asw und die Drehachse T zusammen.

In Figur 6A ist ein drittes Ausführungsbeispiel der vorschlagsgemäßen Verstellvorrichtung 10₃ ebenfalls anhand einer prinzipiellen Draufsicht gezeigt. In diesem Ausführungsbeispiel weist die Verstellvorrichtung 10₂ den zwischen der ersten und der zweiten Oberschiene 14₁, 14₂ verlaufenden Träger 24 auf, auf dem der Antriebsmotor 26 angeordnet ist.

Das erste Getriebe 22₁ ist als ein erstes Schneckengetriebe 42₁ und das zweite Getriebe 22₂ als ein zweites Schneckengetriebe 42₂ ausgestaltet. Das erste Schneckengetriebe 42₁ ist in Figur 6B separat dargestellt. Die Schneckengetriebe 42₁, 42₂ umfassen jeweils eine Schnecke 44 mit einer Schneckenachse 46 und ein Schneckenrad 48 mit einer Schneckenradachse 50, die einen Achswinkel α einschließen. In diesem Fall beträgt der Achswinkel α weniger als 90°, in etwa 30°.

Die Schneckengetriebe 42₁, 42₂ sind bezogen auf die Verschiebeachse L um eine Distanz D versetzt zum Antriebsmotor 26 angeordnet. Der Antriebsstrang 28 umfasst ein Distanzüberbrückungsmittel 52, welches als eine biegsame erste Antriebswelle 54₁ und eine biegsame zweite Antriebswelle 54₂ ausgebildet ist.

Wiederum ist wie in Figur 2A annäherungsweise die Fläche A eingezeichnet, welche der Träger 24, der Antriebsstrang 28 und der Antriebsmotor 26 beim Verstellen des Fahrzeugsitzes zwischen den Unterschienen 12₁, 12₂ maximal überstreichen. Man erkennt, dass ein Teil des Raums zwischen den Unterschienen 12₁, 12₂ nicht überstrichen wird und somit zum Anordnen von Bauteilen verwendet werden kann.

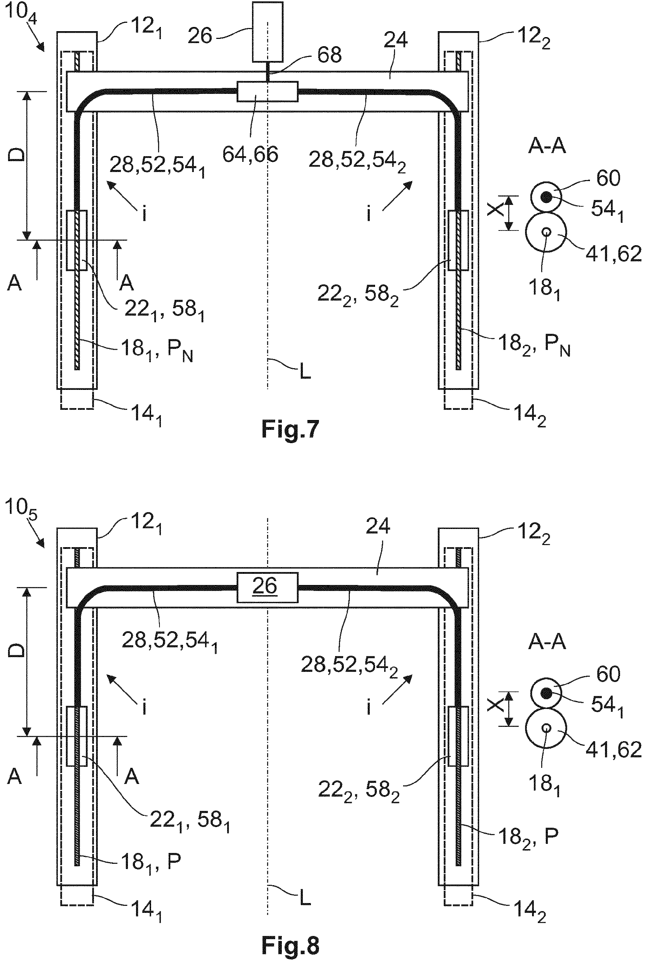

In Figur 7 ist ein viertes Ausführungsbeispiel der erfindungsgemäßen Verstellvorrichtung 10₄ wiederum anhand einer prinzipiellen Draufsicht gezeigt. In diesem Fall ist das erste Getriebe 22₁ als ein erstes Stirnradgetriebe 58₁ und das zweite Getriebe 22₂ als ein zweites Stirnradgetriebe 58₂ ausgeführt und um die Distanz D entlang der Verschiebeachse L zum Antriebsmotor 26 versetzt angeordnet. Der Antriebsstrang 28 umfasst wieder die biegsamen Antriebswellen 54₁ 54₂, welche an einem Ende drehfest an einem oberen Stirnrad 60 verbunden sind. Das obere Stirnrad 60 steht in kämmendem Eingriff mit einem drehbaren unteren Stirnrad 62, welches als die Spindelmutter 41 ausgestaltet ist und mit der Gewindespindel 18₁ zusammenwirkt.

Die biegsamen Antriebswellen 54₁, 54₂ sind mit dem anderen Ende mit einem weiteren Getriebe 64, in diesem Fall mit einem Motor-Schneckengetriebe 66 verbunden, welches antriebsseitig mit einer Abtriebswelle 68 des Antriebsmotors 26 verbunden ist. Eine Direktanbindung an den Antriebsmotor 26 ist ebenfalls denkbar. Das weitere Getriebe 64 dient als Verteilergetriebe. Der Antriebsstrang 28, das Stirnradgetriebe 58 und die Gewindespindel 18 stellen eine Gesamtübersetzung i bereit. Hierzu weisen die Gewindespindeln 18₁, 18₂ eine Gewindenormalsteigung PN auf, die zwischen 2,5 und 3,5 mm beträgt, wie es auch in bekannten Verstellvorrichtungen 10P der Fall ist.

Aufgrund der Anordnung des oberen Stirnrads 60 und des unteren Stirnrads 62 verlaufen die biegsamen Antriebswellen 54₁, 54₂ oberhalb der Oberschienen 14₁, 14₂ und durchlaufen den Raum zwischen den beiden Unterschienen 12₁, 12₂ nicht, was diesen noch besser für die Anordnung von Bauteilen nutzbar macht. Dies setzt allerdings voraus, dass der Achsabstand X zwischen dem oberen Stirnrad 60 und dem unteren Stirnrad 62 korrekt gewählt ist. Insbesondere muss der Achsabstand X groß genug sein, damit das obere Stirnrad 60 weit genug aus dem Hohlraum 16 herausragt, um die biegsame Antriebswelle 54 mit dem oberen Stirnrad 60 verbinden zu können. Der Achsabstand X wird bei Stirnradgetrieben 58 von den Durchmessern des oberen Stirnrads 60 und dem unteren Stirnrad 62 festgelegt. Der Durchmesser des unteren Stirnrads 62 kann nicht beliebig groß gewählt werden, da es sonst an der Oberschiene 12 oder der Unterschiene 14 anschlägt. Das weitere Getriebe 64 reduziert bereits die Drehzahl der biegsamen Antriebswellen 54₁, 54₁ um ein gewisses Maß, so dass das Stirnradgetriebe 58 nur noch eine geringes oder gar keine Übersetzung leisten muss. Je geringer die Übersetzungen, desto weiter nähern sich die Durchmesser des oberen und des unteren Stirnrads 60, 62 an, wodurch der Achsabstand X an die baulichen Gegebenheiten angepasst werden kann. Des Weiteren wird die Geräuschentwicklung in Stirnradgetrieben bei niedrigen Drehzahlen gering gehalten.

In Figur 8 ist ein fünftes Ausführungsbeispiel der erfindungsgemäßen Verstellvorrichtung 10₅ wiederum anhand einer prinzipiellen Draufsicht gezeigt. Der Aufbau des fünften Ausführungsbeispiels gleicht weitgehend demjenigen des vierten Ausführungsbeispiels, allerdings weist der Antriebsstrang 28 das weitere Getriebe 64 nicht auf. Die Gewindespindeln 18₁, 18₂ eine Gewindesteigung P auf, die um ca. 60 bis 70% geringer ist als die Gewindenormalsteigung P beispielsweise des vierten Ausführungsbeispiels. Aufgrund der geringeren Gewindesteigung P weisen die Stirnradgetriebe 58₁, 58₂ ein niedriges Übersetzungsverhältnis nahe 1 auf. Wie bereits zum vierten Ausführungsbeispiel ausgeführt, kann hierdurch der Achsabstand X an die baulichen Gegebenheiten angepasst werden, ohne das Gesamtübersetzungsverhältnis i zu ändern.

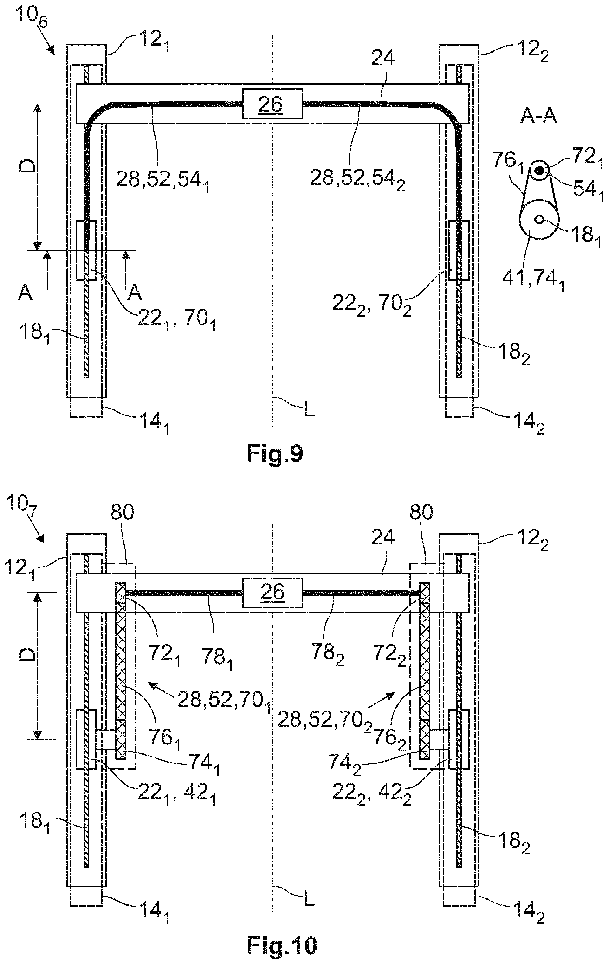

In Figur 9 ist ein sechstes Ausführungsbeispiel der erfindungsgemäßen Verstellvorrichtung 10₆ wiederum anhand einer prinzipiellen Draufsicht gezeigt. In diesem Fall umfasst der Antriebsstrang 28 ein erstes Riemengetriebe 70₁ und ein zweites Riemengetriebe 70₂, die um die Distanz D entlang der Verschiebeachse L zum Antriebsmotor 26 versetzt angeordnet sind. Das erste Riemengetriebe 70₁ weist antriebsseitig ein erstes Antriebsrad 72₁ auf, welches mit der biegsamen ersten Antriebswelle 54₁ drehfest verbunden ist. Weiterhin umfasst das erste Riemengetriebe 70₁ abtriebsseitig ein erstes Abtriebsrad 74₁, welches als die Spindelmutter 41 ausgestaltet ist und mit der ersten Gewindespindel 18₁ zusammenwirkt. Zwischen dem ersten Antriebsrad 72₁ und dem ersten Abtriebsrad 74₁ ist ein erster Riemen 76₁ angeordnet. Das zweite Riemengetriebe 70₂ ist entsprechend aufgebaut. Die Antriebswellen 54₁, 54₂ verlaufen oberhalb der Oberschienen 14₁, 14₂.

In Figur 10 ist ein siebtes Ausführungsbeispiel der erfindungsgemäßen Verstellvorrichtung 10₇ wiederum anhand einer prinzipiellen Draufsicht gezeigt. Auch hier umfasst der Antriebsstrang 28 das erste und das zweite Riemengetriebe 70₁, 70₂, die aber etwas anders angeordnet sind. Der Antriebsstrang 28 umfasst zwei Antriebswellen 78₁, 78₂, die starr ausgeführt sein können und die linear entlang des Trägers 24 verlaufen. Das erste Getriebe 22₁ und das zweite Getriebe 22₂ sind als die Schneckengetriebe 42₁, 42₂ mit einem Achswinkel α von 90° ausgebildet und um die Distanz D entlang der Verschiebeachse L zum Antriebsmotor 26 versetzt angeordnet. Die Riemengetriebe 70₁, 70₂ sind zwischen den Antriebswellen 78₁, 78₂ und den Schneckengetrieben 42₁, 42₂ angeordnet. Das erste Riemengetriebe 70₁ umfasst antriebsseitig das mit der Antriebswelle 78₁ drehfest verbundene erste Antriebsrad 72₁ und abtriebsseitig das mit dem Schneckengetriebe 42₁ zusammenwirkende erste Abtriebsrad 74₁. Der zwischen dem ersten Antriebsrad 72₁ und dem ersten Abtriebsrad 74₁ angeordnete erste Riemen 76₁ verläuft parallel zur Oberschiene 14₁, wodurch die Distanz D überbrückt wird. Das erste Riemengetriebe 70₁ ist in einem Gehäuse 80 angeordnet. Das zweite Riemengetriebe 70₂ ist analog zum ersten Riemengetriebe 70₁ aufgebaut.

### Bezugszeichenliste

- 10, 10₁ - 10₇: Verstellvorrichtung
- 10P: bekannte Verstellvorrichtung
- 12, 12₁, 12₂: Unterschiene
- 14, 14₁, 14₂: Oberschiene
- 16, 16_{1,} 16₂: Hohlraum
- 18, 18₁, 18₂: Gewindespindel
- 20: Halterung
- 22, 22₁, 22₂: Getriebe
- 24: Träger
- 26: Antriebsmotor
- 27: Befestigungslasche
- 28: Antriebsstrang
- 30, 30₁, 30₂: Antriebswelle
- 32: Schneckengetriebe
- 34: Schnecke
- 36: Schneckenrad, Spindelmutter
- 38, 38₁, 38₂: Planetengetriebe
- 39, 39₁, 39₂: Abtriebswelle
- 40, 40₁, 40₂: Antriebsmotor
- 41, 41₁, 41₂: Spindelmutter
- 42, 42₁, 42₂: Schneckengetriebe
- 43: Schraubrad-Planetengetriebe
- 44: Schnecke
- 45: Schraubradverzahnung
- 46: Schneckenachse
- 47: Schraubradwelle
- 48: Schneckenrad
- 49: Planetenträger
- 50: Schneckenradachse
- 51: Planetenrad
- 52: Distanzüberbrückungsmittel
- 53: Planetenradverzahnung
- 54, 54₁, 54₂: biegsame Antriebswelle
- 55: Hohlrad
- 56, 56₁, 56₂: Kegelradgetriebe
- 57: Innenschraubrad
- 58, 58₁, 58₂: Stirnradgetriebe
- 59: Innenverzahnung
- 60: oberes Stirnrad
- 62: unteres Stirnrad
- 64: weiteres Getriebe
- 66: Motor-Schneckengetriebe
- 68: Abtriebswelle
- 70, 70₁, 70₂: Riemengetriebe
- 72, 72₁, 72₂: Antriebsrad
- 74, 74₁, 74₂: Abtriebsrad
- 76, 76₁, 76₂: Riemen
- 78, 78₁, 78₂: linear verlaufende Antriebswellen
- 80: Gehäuse

- A: Fläche
- A_{P}: Planetenradachse
- A_{SW}: Schraubradwellenachse
- D: Distanz
- i: Übersetzungsverhältnis
- L: Verschiebeachse
- P: Gewindesteigung
- P_{N}: Gewindenormalsteigung
- T, T₁, T₂: Drehachse
- X: Achsabstand

- α: Achswinkel

## Patentansprüche

1. Verstellvorrichtung zum Verstellen eines Fahrzeugsitzes eines Fahrzeugs entlang einer Verschiebeachse (L), umfassend
- eine fest mit dem Fahrzeug verbundene erste Unterschiene (12₁) und eine fest mit dem Fahrzeug verbundene zweite Unterschiene (12₂),
- eine in der ersten Unterschiene (12₁) parallel zur Verschiebeachse (L) verschiebbar gelagerte erste Oberschiene (14₁) und eine in der zweiten Unterschiene (12₂) parallel zur Verschiebeachse verschiebbar gelagerte zweite Oberschiene (14₂), wobei die erste Unterschiene (12₁) und die erste Oberschiene (14₁) einen ersten Hohlraum (16₁) und die zweite Unterschiene (12₂) und die zweite Oberschiene (14₂) einen zweiten Hohlraum (16₂) umschließen,
- eine im ersten Hohlraum (16₁) angeordnete und um eine erste Drehachse (T₁) drehbar gelagerte erste Gewindespindel (18₁) und eine im zweiten Hohlraum (16₂) angeordnete und um eine zweite Drehachse (T₂) drehbar gelagerte zweite Gewindespindel (18₂),
- eine mit der ersten Gewindespindel (18₁) zusammenwirkende und zumindest teilweise im ersten Hohlraum (161) angeordnete und fest mit der ersten Oberschiene (14₁) verbundene erste Spindelmutter (41₁) und eine mit der zweiten Gewindespindel (18₂) zusammenwirkende und zumindest teilweise im zweiten Hohlraum (16₂) angeordnete und fest mit der zweiten Oberschiene (14₂) verbundene zweite Spindelmutter (41₂),
- einen ersten Antriebsmotor (40₁), der zum Antreiben der ersten Gewindespindel (18₁) abtriebsseitig mit der ersten Gewindespindel (18₁) wirkverbunden ist, und
- einen zweiten Antriebsmotor (40₂), der zum Antreiben der zweiten Gewindespindel (18₂) abtriebsseitig mit der zweiten Gewindespindel (18₂) wirkverbunden ist.

2. Verstellvorrichtung nach Anspruch 1,
**dadurch gekennzeichnet**, das
- der erste Antriebsmotor eine erste Abtriebswelle (39₁) und der zweite Antriebsmotor eine zweite Abtriebswelle (39₂) umfassen und
- die erste Abtriebswelle (39₁) fluchtend zur ersten Drehachse (T₁) und die zweite Abtriebswelle (39₂) fluchtend zur zweiten Drehachse (T₂) angeordnet sind.

3. Verstellvorrichtung nach einem der Ansprüche 1 oder 2,
**dadurch gekennzeichnet, dass** die Verstellvorrichtung
- ein erstes Getriebe (22₁), welches antriebsseitig mit dem ersten Antriebsmotor (40₁) zum Antreiben der ersten Gewindespindel (18₁) und abtriebsseitig mit der ersten Gewindespindel (18₁) wirkverbunden ist, und
- ein zweites Getriebe (22₂) umfasst, welches antriebsseitig mit dem zweiten Antriebsmotor (40₂) zum Antreiben der zweiten Gewindespindel (18₂) und abtriebsseitig mit der zweiten Gewindespindel (18₂) wirkverbunden ist.

4. Verstellvorrichtung nach Anspruch 3,
**dadurch gekennzeichnet, dass** das erste Getriebe (22₁) als ein erstes Planetengetriebe (38₁) und das zweite Getriebe (22₂) als ein zweites Planetengetriebe (38₂) ausgestaltet sind.

5. Verstellvorrichtung nach Anspruch 4,
**dadurch gekennzeichnet, dass** das erste Planetengetriebe (38₁) und/oder das zweite Planentengetriebe (38₁) als ein Schraubrad-Planetengetriebe (43) ausgebildet sind.

6. Verstellvorrichtung zum Verstellen eines Fahrzeugsitzes eines Fahrzeugs entlang einer Verschiebeachse (L), umfassend
- eine fest mit dem Fahrzeug verbundene erste Unterschiene (12₁) und eine fest mit dem Fahrzeug verbundene zweite Unterschiene (12₂),
- eine in der ersten Unterschiene (12₁) parallel zur Verschiebeachse verschiebbar gelagerte erste Oberschiene (14₁) und eine in der zweiten Unterschiene (12₂) parallel zur Verschiebeachse verschiebbar gelagerte zweite Oberschiene (14₂), wobei die erste Unterschiene (12₁) und die erste Oberschiene (14₁) einen ersten Hohlraum (16₁) und die zweite Unterschiene (12₂) und die zweite Oberschiene (14₂) einen zweiten Hohlraum (16₂) umschließen,
- eine im ersten Hohlraum (161) angeordnete und drehfest mit der ersten Unterschiene (12₁) verbundene erste Gewindespindel (18₁) und eine im zweiten Hohlraum (16₂) angeordnete und drehfest mit der zweiten Unterschiene (12₂) verbundene zweite Gewindespindel (18₂),
- ein mit der ersten Gewindespindel (18₁) zusammenwirkendes und zumindest teilweise im ersten Hohlraum (16₁) angeordnetes und fest mit der ersten Oberschiene (14₁) verbundenes erstes Getriebe (22₁) und ein mit der zweiten Gewindespindel (18₂) zusammenwirkendes und zumindest teilweise im zweiten Hohlraum (16₂) angeordnetes und fest mit der zweiten Oberschiene (14₂) verbundenes zweites Getriebe (22₂),
- einen zwischen der erste Oberschiene (14₁) und der zweiten Oberschiene (14₂) angeordneten Antriebsmotor (26),
- einen zwischen dem Antriebsmotor (26) und dem ersten Getriebe (22₁) und zwischen dem Antriebsmotor (26) und dem zweiten Getriebe (22₂) verlaufenden Antriebsstrang (26), wobei
- der Antriebsmotor (26) bezogen auf die Verschiebeachse (L) um eine Distanz (D) versetzt zum ersten Getriebe (22₁) und zum zweiten Getriebe (22₂) angeordnet ist und der Antriebsstrang (26) Distanzüberbrückungsmittel (52) zum Überbrücken der Distanz (D) umfasst.

7. Verstellvorrichtung nach Anspruch 6,
**dadurch gekennzeichnet, dass** die Distanzüberbrückungsmittel (52) eine biegsame erste Antriebswelle (54₁) und eine biegsame zweite Antriebswelle (54₂) umfassen.

8. Verstellvorrichtung nach einem der Ansprüche 6 oder 7,
**dadurch gekennzeichnet, dass** das erste Getriebe (22₁) und das zweite Getriebe (22₂) jeweils als ein Schneckengetriebe (42) ausgebildet sind.

9. Verstellvorrichtung nach Anspruch 8,
**dadurch gekennzeichnet, dass** das Schneckengetriebe (42) eine Schnecke (44) mit einer Schneckenachse (46) und ein Schneckenrad (48) mit einer Schneckenradachse (50) aufweist, wobei die Schneckenachse (46) und die Schneckenradachse (50) einen Achswinkel (α) einschließen, der weniger als 90° beträgt.

10. Verstellvorrichtung nach Anspruch 9,
**dadurch gekennzeichnet, dass** das erste Getriebe (22₁) und das zweite Getriebe (22₂) jeweils als ein Stirnradgetriebe (58₁, 58₂) ausgebildet sind.

11. Verstellvorrichtung nach Anspruch 6,
**dadurch gekennzeichnet, dass** die Distanzüberbrückungsmittel (52) ein erstes Riemengetriebe (70₁) und ein zweites Riemengetriebe (70₂) umfassen.

12. Verstellvorrichtung nach Anspruch 11,
**dadurch gekennzeichnet, dass**
- die Distanzüberbrückungsmittel (52) eine biegsame erste Antriebswelle (54₁) und eine biegsame zweite Antriebswelle (54₂) umfassen, wobei
- das erste Riemengetriebe (70₁) antriebsseitig ein mit der erste Antriebswelle (54₁) verbundenes erstes Antriebsrad (72₁) und abtriebsseitig ein erstes Abtriebsrad (74₁) aufweist, welches als eine mit der ersten Gewindespindel (18₁) zusammenwirkende erste Spindelmutter (41₁) ausgebildet ist, und
- das zweite Riemengetriebe antriebsseitig ein mit der zweite Antriebswelle (54₂) verbundenes zweites Antriebsrad (72₂) und abtriebsseitig ein zweites Abtriebsrad (74₂) aufweist, welches als eine mit der zweiten Gewindespindel (18₂) zusammenwirkende zweite Spindelmutter (41₂) ausgebildet ist.

13. Verstellvorrichtung nach Anspruch 11,
**dadurch gekennzeichnet, dass**
- der Antriebsstrang (26) eine erste Antriebswelle (78₁) und eine zweite Antriebswelle (78₂) umfasst,
- das erste Getriebe (22₁) als ein erstes Schneckengetriebe (42₁) und das zweite Getriebe (22₂) als ein zweites Schneckengetriebe (42₂) ausgebildet sind,
- das erste Riemengetriebe (70₁) antriebsseitig ein mit der ersten Antriebswelle (78₁) verbundenes erstes Antriebsrad (72₁) und abtriebsseitig ein mit dem ersten Schneckengetriebe (42) zusammenwirkendes erstes Abtriebsrad (74₁) und
- das zweite Riemengetriebe (70₂) antriebsseitig ein mit der zweiten Antriebswelle (78₂) verbundenes zweites Antriebsrad (72₂) und abtriebsseitig ein mit dem zweiten Schneckengetriebe (42) zusammenwirkendes zweites Abtriebsrad (74₂) umfassen.

14. Verstellvorrichtung nach einem der Ansprüche 6 bis 13,
**dadurch gekennzeichnet, dass**
- der Antriebsstrang (28), das erste und das zweite Getriebe (22₁, 22₂) und die erste und die zweite Gewindespindel (18₁, 18₂) so ausgebildet sind, dass zwischen dem vom Antriebsmotor (26) bereitgestellten Drehmoment und dem an den Gewindespindeln (18₁, 18₂) anliegenden Drehmoment ein Gesamtübersetzungsverhältnis (i) zwischen 6 und 7 anliegt,
- die erste und die zweite Gewindespindel (18₁, 18₂) eine Gewindesteigung (P) aufweist, welche gegenüber einer Gewindenormalsteigung (P_{N}) reduziert oder erhöht ist, und
- der Antriebsstrang und/oder das erste und das zweite Getriebe (22₁, 22₂) so an die reduzierte oder erhöhte Gewindesteigung (P) angepasst sind, dass das Gesamtübersetzungsverhältnis (i) erhalten bleibt.

15. Verstellvorrichtung nach Anspruch 6,
**dadurch gekennzeichnet, dass**
- der Antriebsstrang (28), das erste und das zweite Getriebe (22₁, 22₂) und die erste und die zweite Gewindespindel (18₁, 18₂) so ausgebildet sind, dass zwischen dem vom Antriebsmotor (26) bereitgestellten Drehmoment und dem an den Gewindespindeln (18₁, 18₂) anliegenden Drehmoment ein Gesamtübersetzungsverhältnis (i) zwischen 6 und 7 anliegt,
- der Antriebsstrang (26) ein weiteres Getriebe (64), insbesondere ein Motor-Schneckengetriebe (66) umfasst, und
- die erste und die zweite Gewindespindel (18₁, 18₂) und/oder das erste und das zweite Getriebe (22₁, 22₂) so an das weitere Getriebe (64) angepasst sind, dass das Gesamtübersetzungsverhältnis (i) erhalten bleibt.
